# EUROPÄISCHE PATENTSCHRIFT

(11) **EP 2 057 887 B1**
(45) Veröffentlichungstag und Bekanntmachung des Hinweises auf die Patenterteilung: **29.06.2011**
(21) Anmeldenummer: 08015702.7
(22) Anmeldetag: 05.09.2008
(51) Int. Cl.: A01D 75/18

(54) **Landmaschine**
Agricultural machine
Machine agricole

(30) Priorität: 09.11.2007 DE 202007015633 U
(43) Veröffentlichungstag der Anmeldung: 13.05.2009
(73) Patentinhaber: Alois Pöttinger Maschinenfabrik Ges. m.b.H., 4710 Grieskirchen (AT)
(72) Erfinder: Mairhofer, Manfred, 4720 Pötting (AT); Holzinger, Herbert, 4731 Prambachkirchen (DE); Angleitner, Norbert, 4682 Geboltskirchen (DE)
(74) Vertreter: Thoma, Michael

(56) Entgegenhaltungen:
- EP-A- 0 512 602
- EP-A- 1 051 895
- EP-A- 1 637 030
- EP-A- 1 925 198
- DE-U1- 9 320 343
- US-A- 5 566 537

## Beschreibung

Die vorliegende Erfindung betrifft eine Landmaschine, vorzugsweise Mähmaschine, zum Anbau an einen Schlepper, mit zumindest einem Arbeitaggregat, das über einen Aushubzylinder aus einer abgesenkten Arbeitsstellung in eine angehobene Vorgewende- und/oder Transportstellung bringbar ist, sowie einer Anfahrsicherung, mittels derer das Arbeitaggregat bei Anfahren an ein Hindernis in Fahrtrichtung betrachtet nach hinten und/oder nach oben in eine Ausweichstellung beweglich ist, wobei die Anfahrsicherung zumindest einen Anfahrsicherungszylinder zum Halten des Arbeitsaggregats in der Arbeitsstellung und/oder Sperren der Bewegung in die Ausweichstellung bei hindernisfreiem Normalbetrieb aufweist, wobei ein Druckspeicher vorgesehen ist, der mit dem Anfahrsicherungszylinder gekoppelt ist derart, dass der Anfahrsicherungszylinder mit Druck aus dem Druckspeicher in seine die Anfahrsicherung sperrende Stellung vorgespannt ist, wobei der Anfahrsicherungszylinder einen Ablauf aufweist, der mit einer Überdrucksicherunq bis zum Erreichen eines vorbestimmten Drucks verschlossen ist.

Bei Landmaschinen wie Mähwerken fahren die Arbeitsaggregate mit oftmals beachtlicher Geschwindigkeit in nur geringer Höhe über den Boden, so dass selbst durch vorausschauende, intelligente Kollisionsschutzvorrichtungen nicht immer verhindert werden kann, dass das Arbeitsaggregat doch auf ein Hindernis auffährt, beispielsweise an einem Erdhügel hängenbleibt oder am Feldrand an Begrenzungsposten anstößt. Um bei derartigen Kollisionen mit Hindernissen zu verhindern, dass größere Beschädigungen an der Maschine auftreten, sind Anfahrsicherungen in die Geräte eingebaut, die für das Arbeitsaggregat eine zusätzliche Bewegungsachse vorsehen oder eine vorhandene Bewegungsachse nutzen, so dass bei Anfahren an ein Hindernis das Arbeitsaggregat in Fahrtrichtung betrachtet nach hinten und/oder nach oben ausweichen kann. Selbstverständlich muss dabei verhindert werden, dass eine solche Ausweichbewegung zu früh oder unbeabsichtigt eintritt. Bisweilen treten nämlich auch aufgrund anderer Fahrsituationen wie Schlaglöchern in Kurvenfahrten etc. Beschleunigungen an den Arbeitsaggregaten auf, die ansonsten ein unbeabsichtigtes Ausweichen des Arbeitsaggregates aus der vorbestimmten Arbeitsstellung mit sich bringen können, auch wenn eine Kollision mit einem Hindernis gar nicht erfolgt ist.

Hierbei wurde bereits vorgeschlagen, die Anfahrsicherung mit Anfahrsicherungszylindern versehen, die die genannte Bewegungsachse und damit die Bewegung in die Anfahrstellung sperren bzw. das Arbeitsaggregat in der vorgesehen Arbeitsstellung halten, bis durch Auffahren auf ein Hindernis tatsächlich eine Belastung eintritt, die ein Wegbewegen des Arbeitsaggregats_in die Ausweichstellung rechtfertigt. Derartige Hydraulikzylinder werden dabei druckgesteuert betrieben, so dass sie erst bei entsprechender Belastung, die mit einem entsprechenden Druck im Zylinder einhergeht, eine Längenveränderung des Druckzylinders und damit die Ausweichbewegung zulassen. Vorteilhaft an derartigen Anfahrsicherungen mit Druckzylindern ist die Rückstellbarkeit nach Anfahren an ein Hindernis. Hierzu braucht lediglich die Druckkammer des Anfahrsicherungszylinders entsprechend beaufschlagt werden, um das Arbeitsaggregat wieder zurück in seine bestimmungsgemäße Arbeitsposition zu bringen.

Nachteilig an derartigen Anfahrsicherungen mit Druckzylinder ist jedoch der zusätzlich benötigte Druckzylinderanschluss am Schlepper, der oftmals nur bei modernen Schleppern der jüngsten Generation vorhanden ist, bei älteren Schleppern hingegen jedoch fehlt. Dies macht es bislang unmöglich, derartige Anfahrsicherungen mit Hydraulikzylindern als Standard in einer Landmaschinenserie vorzusehen, da viele Geräte natürlich auch von Nutzern gekauft werden, die noch keinen solchen hochmodernen Schlepper haben.

Die EP 19 25 198, die Stand der Technik nach Art. 54 (3) EPÜ ist, zeigt eine Mähmaschine, deren Mähaggregat um eine liegende Schwenkachse mittels eines Hubzylinders nach oben geschwenkt werden kann, und weiterhin um eine aufrechte Schwenkachse bei Auffahren auf Hindernisse nach hinten wegschwenken kann, wobei diese Anfahrsicherungs-Schwenkachse durch einen Hydraulikzylinder bis zu einem vorbestimmten Druck gesperrt ist. Der Anfahrsicherungszylinder soll mit einem Gewichtsentlastungs-Zylinder gekoppelt sein, um beim Anfahren an ein Hindernis eine vergrößerte Gewichtsentlastung zu erzielen.

Die US 5,566,537 zeigt eine Mähmaschine, deren Mähwerk an einem seitlich auskragenden Tragarm aufgehängt ist, wobei der genannte Tragarm um eine aufrechte Achse zurückgeschwenkt und um eine liegende, in Fahrtrichtung weisende Achse nach oben geschwenkt werden kann. Bezüglich der aufrechten Achse ist der Tragarm mit einem Anfahrsicherungszylinder beaufschlagt, der aus einem Druckspeicher vorgespannt ist. Der besagte Anfahrzylinder ist hierbei an dem Tragarm oberhalb dessen liegender Schwenkachse angelenkt, so dass die Vorspannung des Anfahrzylinders gleichzeitig eine Gewichtsentlastung des Mähwerks bewirkt.

Weiterhin zeigt die EP 0 512 602 eine Mähmaschine, dessen Mähewerk an einem Tragarm aufgehängt ist, der um eine aufrechte Achse zurückgeschwenkt werden kann. Der besagte Tragarm ist wiederum an einem weiteren Tragarm befestigt der ebenfalls um eine aufrechte Achse gegenüber dem Anbaubock zurückgeschwenkt werden kann. Beide Tragarme sind hierbei bezüglich ihrer jeweiligen aufrechten Schwenkachse durch einen Hydraulikzylinder beaufschlagt, die parallel geschaltet sind und aus einem Druckspeicher vorgespannt sind, um das Mähwerk in der Arbeitsposition zu halten.

Hier will die vorliegende Erfindung Abhilfe schaffen. Ihr liegt die Aufgabe zugrunde, eine verbesserte Landmaschine der genannten Art zum Anbau an einen Schlepper zu schaffen, die Nachteile des Standes der Technik vermeidet und Letzteren in vorteilhafter Weise weiterbildet. Insbesondere soll eine unabängig vom Schleppertyp verwendbare Anfahrsicherung geschaffen werden, die eine einfache Rückstellung des Arbeitsaggregats aus der Ausweichstellung zurück in die vorbestimmte Arbeitsposition erlaubt.

Erfindungsgemäß wird diese Aufgabe durch eine Landmaschine gemäß Anspruch 1 gelöst. Bevorzugte Ausgestaltungen der Erfindung sind Gegenstand der abhängigen Ansprüche.

Es wird also vorgeschlagen, das Drucksystem der Anfahrsicherung autark auszubilden, so dass es auch ohne einen eigenen, separaten Anschluss an die Schlepperhydraulik arbeiten kann. Die zur Rückstellung notwendige Druckbeaufschlagung des Anfahrsicherungszylinders wird über anderweitig an der Landmaschine vorhandene Druckkreise bewerkstelligt. Erfindungsgemäß ist der Anfahrsicherungszylinder mittels eines Druckspeichers rückstellbar und/oder vorgespannt, der mit dem Anfahrsicherungszylinder derart gekoppelt ist, dass der Anfahrsicherungszylinder mit Druck aus dem Druckspeicher in seine die Anfahrsicherung sperrende Stellung vorgespannt ist. Mittels eines solchen Druckspeichers kann ggf. auch an Maschinen ohne einen Aushubzylinder für das Arbeitsaggregat eine autarke Lösung für ein druckmittelgesteuertes und sich insbesondere auch von selbst rückstellendes Anfahrsicherungssystem geschaffen werden, das ebenfalls keinen separaten Druckmittelanschluss am Schlepper benötigt.

Vorteilhafterweise ist dem Druckspeicher dabei eine Druckeinstelleinrichtung zur Einstellung des Vorspanndruckes zugeordnet, so dass der vom Druckspeicher auf den Anfahrsicherungszylinder gegebene Druck an die Einsatzbedingungen und - anforderungen angepasst werden kann. Dabei kann zwischen dem Druckspeicher und dem Anfahrsicherungszylinder in Weiterbildung der Erfindung beispielsweise ein Manometer vorgesehen sein. Alternativ oder zusätzlich kann auch der Druckspeicher selbst mit einer Druckeinstelleinrichtung versehen sein.

Um das System einfach befüllen und/oder auch an andere Speisesysteme anschließen zu können, kann in Weiterbildung der Erfindung der Druckspeicher und/oder die Verbindung zwischen Druckspeicher und Anfahrsicherungszylinder in Verbindung mit einem Befüllanschluss stehen, der mit einem Hydraulikkreis des Schleppers und/oder einem anderen Druckspeisekreis verbindbar ist. Insbesondere kann über den genannten Befüllanschluss ggf. das System auch mit dem Aushubzylinder gekoppelt werden.

Erfindungsgemäß ist der Anfahrsicherungszylinder mit dem Aushubzylinder, mit dem das Arbeitsaggregat in die Vorgewende- bzw. Transportstellung angehoben werden kann, gekoppelt derart, dass der Anfahrsicherungszylinder bei Anheben des Arbeitsaggregats in die genannte Vorgewende- und/oder Transportstellung von dem Aushubzylinder her druckbeaufschlagt ist. Es wird sozusagen der Aushubzylinder bzw. der Druck für den Aushubzylinder zum Ausheben des Arbeitsaggregats angezapft, um den Anfahrsicherungszylinder zyklisch rückzustellen bzw. vorzuspannen. Jedesmal wenn am Vorgewende das Arbeitsaggregat angehoben wird, wird der entsprechende Druck auch auf den Anfahrsicherungszylinder gegeben. Dies kann unmittelbar der Druck aus dem Aushubzylinder sein, es kann jedoch ggf. auch ein verminderter Druck sein, beispielsweise indem in die Verbindung zwischen Aushubzylinder und Anfahrsicherungszylinder ein entsprechendes Strömungssteuerelement vorgesehen wird, das einen entsprechenden Druckabfall bewirkt.

Erfindungsemäß ist dabei in der Strömungsverbindung, die durch eine Leitung bewirkt werden kann, jedoch auch in Form eines Kanals oder dergleich ausgebildet sein kann, zwischen dem Anfahrsicherungszylinder und dem Aushubzylinder eine zum Aushubzylinder hin sperrende Rückflusssperre vorgesehen, die vorteilhafterweise in Form eines Rückschlagventils ausgebildet sein kann. Die Rückflusssperre lässt Druckmittel vom Aushubzylinder zum Anfahrsicherungszylinder, jedoch nicht umgekehrt vom Anfahrsicherungszylinder zum Aushubzylinder. Hierdurch ist sichergestellt, dass beim Anheben des Arbeitsaggregats in die Vorgwende- bzw. Transportstellung Druckmittel in ausreichender Menge und mit ausreichendem Druck auf den Anfahrsicherungszylinder gegeben werden kann, jedoch nicht ungewollt der Anfahrsicherungszylinder Druckmittel an den Aushubzylinder verliert, beispielsweise wenn Letzterer druckfrei geschaltet ist, wie dies im normalen Arbeitsbetrieb der Fall sein kann.

Um das Auslösen der Anfahrsicherung präzise zu steuern, ist an dem Anfahrsicherungszylinder ein Ablauf vorgesehen, der mit einem druckgesteuerten Ventil nur bis zum Erreichen eines vorbestimmten Auslösedrucks verschlossen ist. Übersteigt der Druck im Anfahrsicherungszylinder den genannten Auslösedruck, insbesondere dann, wenn das Arbeitsaggregat an ein Hindernis anfährt, kann das in dem Anfahrsicherungszylinder gespeicherte Druckmittel ausströmen bzw. ablaufen, so dass der Anfahrsicherungszylinder seine Länge ändern und das Arbeitsaggregat sich in die Ausweichstellung bewegen kann. Während der Anfahrsicherungszylinder im "Normal"-Betrieb gesperrt ist und das im Anfahrsicherungszylinder gespeicherte Druckmittel nicht abströmen kann, lässt die Überdrucksicherung bei Anfahren an ein Hindernis das Druckmittel ausströmen, wodurch der Anfahrsicherungszylinder beweglich wird.

Vorteilhafterweise ist dabei der Auslösedruck der Überdrucksicherung einstellbar, so dass präzise gesteuert werden kann, wie stark ein Anfahren sein muss, damit das Arbeitsaggregat in seiner Ausweichstellung fahren kann.

Erfindungsgemäß ist der Überdruckablauf in den Aushubzylinder zurückgeführt, in dessen Druckkammer, die bei Druckbeaufschlagung zum Ausheben des Arbeitsaggregats in die Vorgewende- und/oder Transportstellung führt. Dies kann vorteilhafterweise dazu genutzt werden, dass zusätzlich zu der eigentlichen Ausweichbewegung des Arbeitsaggregats, die durch die Bewegung des Anfahrsicherungszylinders ermöglicht wird, auch noch eine Aushubbewegung über den Aushubzylinder erzeugt wird, wodurch ein oftmals noch besseres Ausweichen vor dem Hindernis erreicht wird, da die im Arbeitsbetrieb regelmäßig auftretenden Hindernisse wie Steine, Wurzelstöcke etc. oft eine nur recht begrenzte Höhe besitzen. Vorteilhafterweise kann die Rückführung des über die Überdrucksicherung abgelassenen Druckmittels über dieselbe Leitung erfolgen, über die auch bei der Rückstellung der Anfahrsicherung das Druckmittel vom Aushubzylinder her in den Anfahrsicherungszylinder gedrückt wird. Vorteilhafterweise ist in der vorgenannten Weise hierzu das druckgesteuerte Ventil der Überdrucksicherung mit einem Bypass umgangen, der mit einem Rückschlagventil versehen ist, so dass beim Befüllen des Anfahrsicherungszylinders das druckgesteuerte Ventil den Befüllvorgang nicht behindert.

Die Erfindung wird nachfolgend anhand bevorzugter Ausführungsbeispiele und zugehöriger Zeichnungen näher erläutert. In den Zeichnungen zeigen:
- Fig. 1:: eine schematische Draufsicht auf eine an einen Schlepper angebaute Landmaschine in Form einer Mähmaschine nach einer vorteilhaften Ausführung der Erfindung, die für jedes ihrer seitlich auskragenden Mähwerke einen Aushubzylinder sowie eine Anfahrsicherung mit einem Anfahrsicherungszylinder aufweist,
- Fig. 2:: eine schematische Darstellung der hydraulischen Verbindung des Anfahrsicherungszylinders mit den beiden Aushubzylindern der Mähmaschine aus Fig. 1 nach einer bevorzugten Ausführung der Erfindung,
- Fig. 3:: eine schematische Darstellung der Verbindung des Anfahrsicherungszylinders der Mähmaschine aus Fig. 1 mit einem Druckspeicher nach einer weiteren vorteilhaften Ausführung der Erfindung, und
- Fig. 4:: eine schematische Darstellung der Verbindung des Anfahrsicherungszylinders sowohl mit einem Druckspeicher als auch mit den Aushubzylindern.

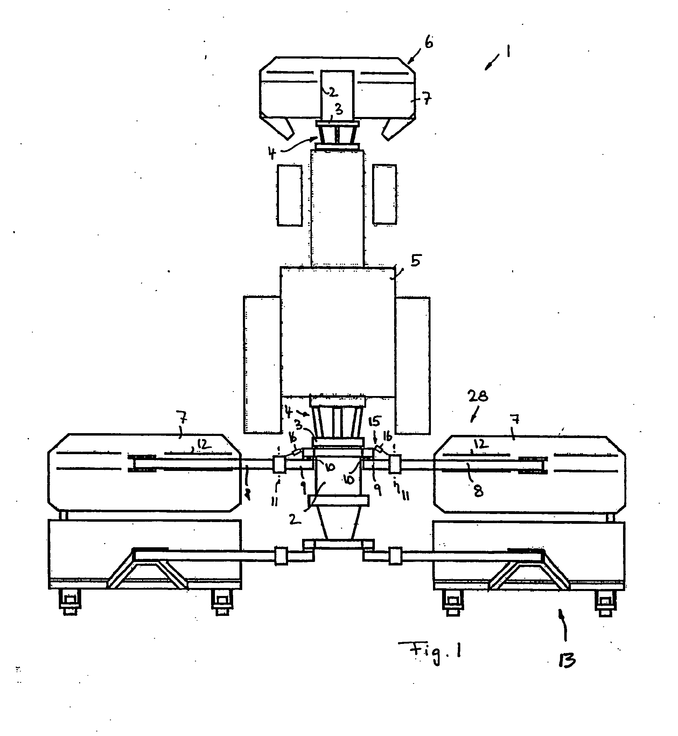

Die in Fig. 1 dargestellte Mähmaschine 1 umfasst einen Rahmen 2, der an einem Anbaubock 3 befestigt ist, der mittels einer an sich üblichen Dreipunktanlenkung 4 an einen Schlepper 5 angebaut werden kann. Es versteht sich jedoch, dass auch andere Anbauvorrichtungen Verwendung finden können, wobei beispielsweise aufgesattelte Rahmen über Deichseln angelenkt sein können.

Im Falle des Frontmähwerks 6 trägt der Rahmen 2 mehr oder minder unter sich das Arbeitsaggregat 7. Das Heckmähwerk 28 umfasst hingegen zwei seitlich auskragend angeordnete Arbeitsaggregate 7, die jeweils an auskragenden Tragarmen 8 angelenkt sind, die an dem zuvor genannten Rahmen 2 gelagert sind. Die Tragarme 8 sind hierbei an Tragstücken 9 angelenkt, die gegenüber dem Rahmen 2 um aufrechte Anfahrsicherungsachsen 10 nach hinten verschwenkbar sind. Gegenüber den genannten Tragstücken 9 sind die Tragarme 8 um liegende, in Fahrtrichtung weisende Aushubachsen 11 nach oben verschwenkbar. Zum Ausheben der Tragarme 8 mitsamt den daran angelenkten Arbeitsaggregaten 7 sind zwei Aushubzylinder 12 vorgesehen, die in geeigneter Weise einerseits am Tragarm 8 und andererseits beispielsweise am Tragstück 9 oder einem anderen geeigneten Rahmenteil angelenkt sind.

In der gezeichneten Ausführungsform sind dabei den Arbeitsaggregaten 7 des Heckmähwerks 28 noch Konditionierer und/oder Querförderer 13 nachgeordnet, die in entsprechender Weise an Tragarmen aufgehängt sind.

Damit die Arbeitsaggregate 7 des Heckmähwerks 28 nicht ungewollt nach hinten schwenken, umfasst die Anfahrsicherung 15 jeweils einen der entsprechenden Anfahrsicherungsachse 10 zugeordneten Anfahrsicherungszylinder 16, der in der gezeichneten Ausführungsform einerseits an dem Tragstück 9 und andererseits an einem festen Punkt am Rahmen 2 angelenkt ist und von der zuvor genannten Anfahrsicherungsachse 10 entsprechend beabstandet ist, um diesbezüglich einen Hebelarm zu haben. Der genannten Anfahrsicherungszylinder 16 hält dabei das jeweilige Arbeitsaggregat 7 bzw. den zugehörigen Tragarm 8 im normalen Betrieb in der in Fig. 1 gezeigten seitlich quer auskragenden Arbeitsstellung. Bei Anfahren an ein Hindernis kann sich der Anfahrsicherungszylinder 16 jedoch in seiner Länge ändern, wobei er sich in der gezeichneten Einbausituation verlängert, um hierdurch ein Zurückschwenken des Arbeitsaggregats 7 in eine Ausweichstellung zu ermöglichen.

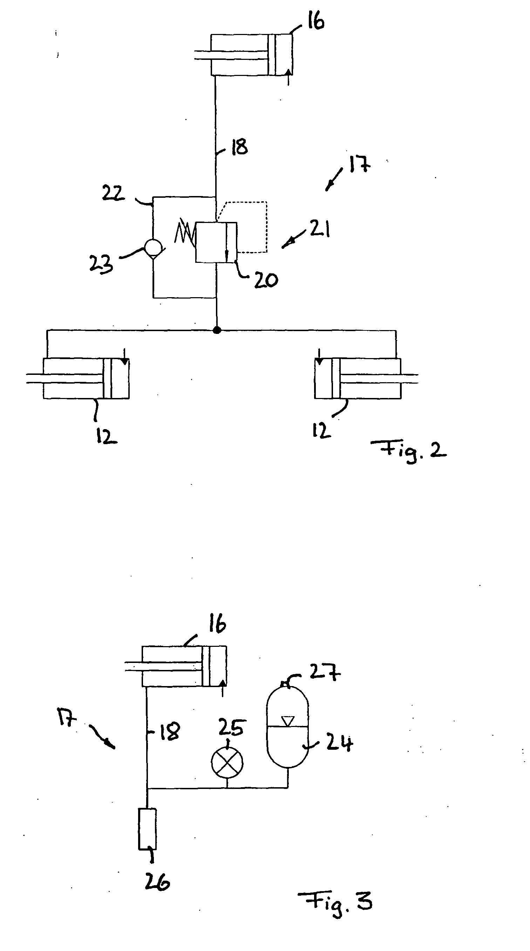

Die Druckbeaufschlagung des Anfahrsicherungszylinders 16 kann hierbei vorteilhafterweise mittels der in Fig. 2 gezeigten Drucksteuervorrichtung 17 gesteuert werden. Wie Fig. 2 zeigt, ist der Anfahrsicherungszylinder 16 als einfach wirkender Zylinder ausgebildet, dessen druckbeaufschlagte Kammer mit den beiden Aushubzylindern 12 über eine geeignete Druckleitung 18 in Strömungsverbindung steht bzw. bringbar ist. Die beiden Aushubzylinder 12 sind dabei parallel mit der genannten Druckleitung 18 verbunden, wobei von den genannten Aushubzylindern 12 die Kammer an die Druckleitung 18 angeschlossen ist, die beim Ausheben des Arbeitsaggregats 7 eine Druckbeaufschlagung erfährt.

Vom Anfahrsicherungszylinder 16 her betrachtet ist die Druckleitung 18 dabei normalerweise abgesperrt. In der Druckleitung 18 ist ein druckgesteuertes Schaltventil 20 vorgesehen, das als Überdrucksicherung 21 dient. Dabei wird der in dem Anfahrsicherungszylinder 16 herrschende Druck als Steuerdruck verwendet. Steigt dieser über ein vorbestimmtes Maß an, wird das Schaltventil 20 freigeschaltet, so dass Hydraulikfluid aus dem Anfahrsicherungszylinder 16 abströmen kann. Erreicht der genannte Druck indes nicht den eingestellten Schwellwert, verharrt das Schaltventil 20 in seiner sperrenden Stellung, wodurch der Anfahrsicherungszylinder 16 in seiner sperrenden Stellung gehalten wird.

Wie Fig. 2 zeigt, besitzt die Druckleitung 18 um das genannte druckgesteuerte Schaltventil 20 herum einen Bypass 22, der mit einem Rückschlagventil 23 versehen ist, das einen Druckmittelstrom von den Aushubzylindern 12 zu dem Anfahrsicherungszylinder 16 zulässt, einen umgekehrten Druckmittelfluss jedoch sperrt bzw. verhindert.

Hierdurch kann folgende Funktion realisiert werden: Ohne einen eigenen Druckmittelanschluss am Schlepper zu benötigen, wird der Anfahrsicherungszylinder 16 bei jedem Ausheben der Arbeitsaggregate 7 in die Vorgewende- bzw. Transportstellung von den Aushubzylindern 12 her mit Druck beaufschlagt, so dass der Anfahrsicherungszylinder 16 in seine die Anfahrsicherung 15 sperrende Stellung gespannt wird. Dort verharrt der Anfahrsicherungszylinder 16 im Normalbetrieb, da ein Abfluss von Druckmittel aus der entsprechenden Druckkammer des Anfahrsicherungszylinders 16 durch das Rückschlagventil 23 und das druckgesteuerte Schaltventil 20 verhindert ist. Fährt jedoch das Arbeitsaggregat 7 an ein Hindernis an, führt dies zu einem entsprechenden Druckanstieg in dem Anfahrsicherungszylinder 16. Erreicht dieser Druckanstieg den voreingestellten Schwellwert des druckgesteuerten Schaltventils 20, öffent dieses Schaltventil 20, wodurch das Druckmittel in die Aushubzylinder 12 strömen kann. Hierdurch kann einerseits der Anfahrsicherungszylinder 16 sich bewegen und dementsprechend das Arbeitsaggregat in die Ausweichstellung fahren. Andererseits kommt es über die Aushubzylinder 12 zu einem zusätzlichen Ausheben des Arbeitsaggregats 7, wodurch eine zusätzliche Ausweichbewegung generiert werden kann.

Bei der in Fig. 3 dargestellten Ausführungsform wird der Anfahrsicherungszylinder 16 mittels Druck von einem Druckspeicher 24 her in seine die Anfahrsicherung 15 verriegelnde Stellung vorgespannt. Dabei ist der genannte Anfahrsicherungszylinder 16 über eine Druckleitung 18 mit dem genannten Druckspeicher 24 verbunden, wobei zwischen dem Druckspeicher 24 und dem Anfahrsicherungszylinder 16 eine Drucksteuervorrichtung in Form eines Druckmanometers 25 vorgesehen ist, mittels dessen der anliegende Druck gesteuert werden kann. Zudem ist die genannte Druckleitung 18 mit einem Befüllanschluss 26 versehen, über den das gesamte System mit Druckmittel befüllt werden kann.

Der Druckspeicher 24 kann grundsätzlich verschieden ausgebildet sein. In der gezeichneten Ausführungsform ist er als Gasdruckspeicher ausgebildet, so dass über unter Druck stehendes Gas, beispielsweise Stickstoff, der gewünschte Druck auf den Anfahrsicherungszylinder 16 gegeben werden kann. Der Druckspeicher 24 weist hierbei ebenfalls einen Befüllanschluss 27 auf, über den unter Druck stehendes Gas in den Druckspeicher 24 gegeben werden kann.

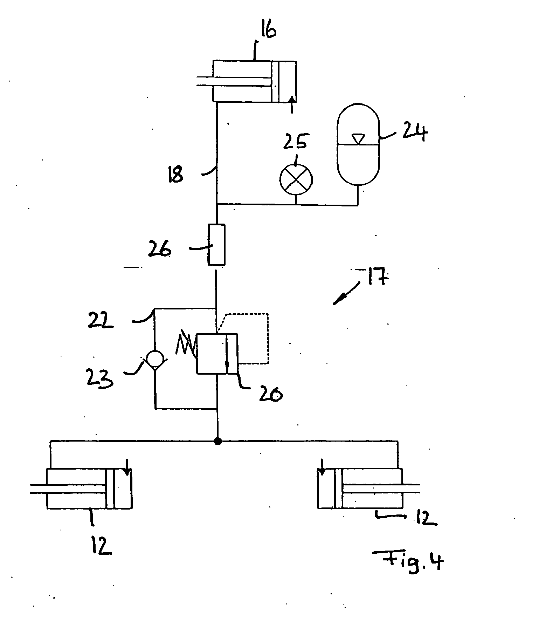

Wie Fig. 4 zeigt, können die in Fig. 2 und 3 gezeigten System auch miteinander kombiniert werden. Hierdurch ist über den Druckspeicher 24 im Normalbetrieb die Rückstellung des Anfahrsicherungszylinders 16 sichergestellt, zudem wird über die Anbindung an die Aushubzylinder 12 zyklisch eine Rückstellung des Systems in die Ausgangssituation bewirkt, wodurch auch schleichende Druckverluste kompensiert werden können.

## Patentansprüche

1. Landmaschine, vorzugsweise Mähmaschine, zum Anbau an einen Schlepper (5), mit zumindest einem Arbeitsaggregat (7), das über einen Aushubzylinder (12) aus einer abgesenkten Arbeitsstellung in eine angehobene Vorgewende- und/oder Transportstellung bringbar ist, sowie einer Anfahrsicherung (15), mittels derer das Arbeitsaggregat (7) bei Anfahren an ein Hindernis in Fahrtrichtung betrachtet nach hinten und/oder nach oben in eine Ausweichstellung beweglich ist, wobei die Anfahrsicherung (15) zumindest einen Anfahrsicherungszylinder (16) zum Halten des Arbeitsaggregats (7) in der Arbeitsstellung und/oder Sperren der Bewegung in die Ausweichstellung bei hindernisfreiem Normalbetrieb aufweist, wobei ein Druckspeicher (24) vorgesehen ist, der mit dem Anfahrsicherungszylinder (16) gekoppelt ist derart, dass der Anfahrsicherungszylinder (16) mit Druck aus dem Druckspeicher (24) in seine die Anfahrsicherung (15) sperrende Stellung vorgespannt ist, wobei der Anfahrsicherungszylinder (16) einen Ablauf aufweist, der mit einer Überdrucksicherung (21) bis zum Erreichen eines vorbestimmten Drucks verschlossen ist, **dadurch gekennzeichnet, dass** der Anfahrsicherungszylinder (16) mit dem Aushubzylinder (12) gekoppelt ist derart, dass der Anfahrsicherungszylinder (16) bei Anheben des Arbeitsaggregats (7) in die Vorgewende- und/oder Transportstellung von dem Aushubzylinder (12) her druckbeaufschlagt ist, wobei in der Strömungsverbindung (18) zwischen dem Anfahrsicherungszylinder (16) und dem Aushubzylinder (12) eine zum Aushubzylinder (12) hin sperrende Rückflusssperre vorgesehen ist, wobei der Ablauf des Anfahrsicherungszylinders (16) in den Aushubzylinder (12) in dessen Druckkammer geführt ist, die bei Druckbeaufschlagung zum Ausheben des Arbeitsaggregats (7) in die Vorgewende- und/oder Transportstellung führt.

2. Landmaschine nach dem vorhergehenden Anspruch, wobei dem Druckspeicher (24) eine Druckeinstelleinrichtung zur Einstellung des Vorspanndrucks zugeordnet ist.

3. Landmaschine nach einem der beiden vorhergehenden Ansprüche, wobei der Druckspeicher (24) und/oder die Verbindung zwischen Druckspeicher (24) und Anfahrsicherungszylinder (16) mit einem Befüllanschluss (26) in Verbindung steht, der mit einem Hydraulikkreis des Schleppers (5) und/oder einem anderen Druckspeisekreis verbindbar ist.

4. Landmaschine nach dem vorhergehenden Anspruch, wobei der Befüllanschluss (26) mit dem Aushubzylinder (12) verbindbar ist.

5. Landmaschine nach einem der vorhergehenden Ansprüche, wobei die Überdrucksicherung (21) ein druckgesteuertes Schaltventil (20) aufweist, das durch den im Anfahrsicherungszylinder (16) herrschenden Druck gesteuert ist.

6. Landmaschine nach dem vorhergehenden Anspruch, wobei das druckgesteuerte Schaltventil (20) hinsichtlich seines Öffnungsdrucks einstellbar ausgebildet ist.

## Claims

1. An agricultural machine, preferably a reaping machine, for attachment to a tractor (5), having at least one piece of working equipment (7) which can be brought via a raising cylinder (12) out of a lowered working position into a raised headland position and/or transport position and having a collision protection device (15) by means of which the piece of working equipment (7) is movable, viewed in the direction of travel, to the rear and/or upwards into an escape position on a moving onto an obstacle, wherein the collision protection device (15) has at least one collision protection cylinder (16) for holding the piece of working equipment (7) in the working position and/or for blocking the movement into the escape position in obstacle-free normal operation, wherein a pressure store (24) is provided which is coupled to the collision protection cylinder (16) such that the collision protection cylinder (16) is biased by pressure from the pressure store (24) into its position blocking the collision protection device (15), wherein the collision protection cylinder (16) has an outlet which is closed by an overpressure protection device (21) until a predetermined pressure is reached, **characterised in that** the collision protection cylinder (16) is coupled to the raising cylinder (12) such that the collision protection cylinder (16) is pressurised from the raising cylinder (12) on a raising of the piece of working equipment (7) into the headland position and/or transport position, with a backflow block which blocks in the direction of the raising cylinder (12) being provided in the flow connection (18) between the collision protection cylinder (16) and the raising cylinder (12), with the outlet of the collision protection cylinder (16) being guided into the raising cylinder (12) into its pressure chamber, which leads into the headland position and/or transport position on pressurisation for raising the piece of working equipment (7).

2. An agricultural machine in accordance with the preceding claim, wherein a pressure adjustment device is associated with the pressure store (24) for setting the bias pressure.

3. An agricultural machine in accordance with either of the two preceding claims, wherein the pressure store (24) and/or the connection between the pressure store (24) and the collision protection device (16) is in communication with a filler connection (26) which can be connected to a hydraulic circuit of the tractor (5) and/or to another pressure feed circuit.

4. An agricultural machine in accordance with the preceding claim, wherein the filler connection (26) can be connected to the raising cylinder (12).

5. An agricultural machine in accordance with one of the preceding claims, wherein the overpressure protection device (21) has a pressure-controlled switch valve (20) which is controlled by the pressure present in the collision protection cylinder (16).

6. An agricultural machine in accordance with the preceding claim, wherein the pressure-controlled switch valve (20) is made adjustable with respect to its opening pressure.

## Revendications

1. Machine agricole, de préférence moissonneuse, à accoupler à un tracteur (5), avec au moins un appareil de travail (7) qui peut être amené par un vérin de levage (12) d'une position de travail abaissée à une position de fourrière et/ou de transport relevée, et une sécurité de percussion (15) au moyen de laquelle l'appareil de travail (7), lorsqu'il percute un obstacle, en regardant dans la direction de roulement, est déplaçable vers l'arrière et/ou vers le haut en une position d'écartement, où la sécurité de percussion (15) présente au moins un vérin de sécurité de percussion (16) pour retenir l'appareil de travail (7) dans la position de travail et/ou pour bloquer le mouvement dans la position d'écartement lors d'un fonctionnement normal sans obstacle, où un accumulateur de pression (24) est prévu qui est couplé au vérin de sécurité de percussion (16) de telle sorte que le vérin de sécurité de percussion (16) est précontraint par la pression de l'accumulateur de pression (24) dans sa position bloquant la sécurité de percussion (15), où le vérin de sécurité de percussion (16) présente un écoulement qui est fermé par une sécurité de surpression (21) jusqu'à l'atteinte d'une pression prédéfinie, **caractérisée en ce que** le vérin de sécurité de percussion (16) est couplé au vérin de levage (12) de telle sorte que le vérin de sécurité de percussion (16), lors du relevage de l'appareil de travail (7) dans la position de fourrière et/ou de transport est chargé en pression par le vérin de levage (12), où est prévu dans la liaison d'écoulement (18) entre le vérin de sécurité de percussion (16) et le vérin de levage (12) un blocage de reflux bloquant vers le vérin de levage (12), où l'écoulement du vérin de sécurité de percussion (16) est guidé dans le vérin de levage (12) dans sa chambre de pression, qui, lors d'une sollicitation en pression pour le relevage de l'appareil de travail (7) mène à la position de fourrière et/ou de transport.

2. Machine agricole selon la revendication précédente, dans laquelle est associée à l'accumulateur de pression (24) une installation de réglage de pression pour le réglage de la pression de pré-contrainte.

3. Machine agricole selon l'une des deux revendications précédentes, dans laquelle l'accumulateur de pression (24) et/ou la liaison entre l'accumulateur de pression (24) et le vérin de sécurité de percussion (16) est en liaison avec un raccord de remplissage (26) qui peut être relié à un circuit hydraulique du tracteur (5) et/ou un autre circuit d'alimentation en pression.

4. Machine agricole selon la revendication précédente, dans laquelle le raccord de remplissage (26) peut être relié au vérin de levage (12).

5. Machine agricole selon l'une des revendications précédentes, où la sécurité de surpression (21) présente une vanne de commutation (20) commandée par la pression qui est commandée par la pression régnant dans le vérin de sécurité de percussion (16).

6. Machine agricole selon la revendication précédente, dans laquelle la vanne de commutation commandée par pression (20) est réglable quant à sa pression d'ouverture.
